# EUROPEAN PATENT APPLICATION

(11) **EP 0 730 237 A1**
(43) Date of publication of application: **04.09.1996**
(21) Application number: 96102910.5
(22) Date of filing: 27.02.1996
(51) Int. Cl.: G06F 15/167

(54) **Multi-processor system with virtually addressable communication registers and controlling method thereof**

(30) Priority: 28.02.1995 JP 39545/95; 26.04.1995 JP 102540/95; 26.04.1995 JP 102541/95
(71) Applicant: NEC CORPORATION, Tokyo (JP)
(72) Inventor: Ando, Noriyuki, Kofu-shi, Yamanashi (JP)
(74) Representative: VOSSIUS & PARTNER

(57) **Abstract**

A multi-processor system includes processors and a communication register which is used for synchronization control between the processors. Each processor has a translation table for translating a logical address to a physical address of the communication register. A least-frequently-used word of the communication register is swapped out to a main storage when the communication register is likely to be exhausted and thus unavailable for use.

## Description

The present invention relates to a multi-processor system, and more particularly to a multi-processor system having communication registers which are addressable with virtual addresses.

In a multi-processor system having a plurality of processors, time for processing of synchronization control, exclusive control, and communication control among the processors is a critical problem. Hence, for high-speed processing thereof, a storage unit having a shorter access time and a higher access throughput than the main storage unit is preferably provided. Thus, common variables for the above types of control are allocated to such a storage unit, and each processor accesses such a storage unit.

For example, communication between two processors through read and write operations on common variables can be performed faster when communication is performed through a storage unit having a shorter access time than through the main storage unit. This type of storage unit is hereinafter called a "communication register".

In parallel processing performed in a multi-processor, each of the above-mentioned synchronization control, exclusive control, and communication control is not executed in parallel. As a result and as the degree of parallelism increases, these types of control greatly affect the entire processing performance. Therefore, the communication register configuration greatly contributes to improved performance of the multi-processor system.

The communication register is used such that it is divided into sets each having a plurality of words. One set is allocated to one process. Here, the process is a set of "threads" which should be executed in parallel. One thread is executed by one of a plurality of processors, and a plurality of threads are simultaneously executed in parallel by the plurality of processors. The function of each word in the set of the communication register is assigned previously by each program. For example, a first word is used as a lock variable for exclusive control, another word may be used as a counter for synchronization control, and so forth.

When execution of a process is started, a program requests that the operating system provide a set of the communication register. In response to the request, the operating system provides a certain set (e.g., a set number of the set) to the process. Upon reception of a set-use right, the process performs various settings and starts parallel execution. After completion of the parallel execution, the process informs the operating system of completion of the parallel execution and releases the set used.

In the multi-processor system having the above communication register, the number of words (i.e., the size of the communication register) must be relatively small due to limitations based on the logic configuration and the circuit implementation to attain a shorter access time and a higher throughput performance than the main storage unit.

However, the number of communication register words required by each process depends on its characteristics. Some processes may not use a communication register, whereas others may perform communication control by using many communication registers. That is, the necessary number of communication registers is not uniform. Therefore, if the set size is determined so as to match a process that requires a maximum number of communication register words, then the set size becomes very large, so that the communication register is likely to be exhausted (e.g.,not available for use) by a shortage thereof. When a process to be executed in parallel is rendered in a state that a set is not allocated sufficiently, the set exhaustion suspends the execution of the process.

Further, the following problem occurs. It is assumed that a certain process (process_1) secures a continuous area of a register and the next process (process_ 2) secures an area next to the area secured by process_1. Consider a case where another process (process_3) is started after process_1 has been finished and the communication register area has been released. In this case, if process_3 needs an area that is larger than the area that has been used by process_1, the area used by process_1 cannot be used and is therefore left empty. A state with an empty area is called "fragmentation", and such a state lowers the use efficiency of the communication register. This phenomenon occurs due to a secured area of a communication register always being a continuous area.

In view of the foregoing problem of the conventional system, an object of the present invention is to prevent the exhaustion of the communication registers.

In a multi-processor system according to a first aspect of the present invention, having processors and a communication register which is accessed by the processors, the communication register is accessed with a logical address.

With the unique and unobvious structure of the present invention, a sufficient size of the communication registers is provided to each process and the communication registers do not become exhausted.

The above-mentioned and other objects, features and advantages of this invention will become more apparent by reference to the following detailed description of the invention taken in conjunction with the accompanying drawings in which:
FIG. 1 is a block diagram showing the configuration of a multi-processor system according to a first embodiment of the present invention;
FIG. 2 is a format for a type of a communication register access instruction;
FIG. 3 is block diagram showing the configuration of the communication register in the multi-processor system;
FIG. 4 is a block diagram showing the configuration of a network in the multi-processor system;
FIG. 5 is a block diagram showing the configuration of an address translation mechanism according to the first embodiment of the present invention;
FIG. 6 is a format of a communication register set instruction;
FIG. 7 is a block diagram showing the configuration of the address translation mechanism according to a second embodiment of the present invention;
FIG. 8 is a flowchart showing the operation of an access to the communication registers in accordance with the first embodiment of the present invention;
FIG. 9 is a block diagram showing the configuration of a clustered multi-processor system according to the first embodiment of the present invention; and
FIG. 10 is a block diagram showing the configuration of a second clustered multi-processor system according to the first embodiment of the present invention.

A multi-processor system in accordance with preferred embodiments of the present invention will be described in detail with reference to the accompanying drawings.

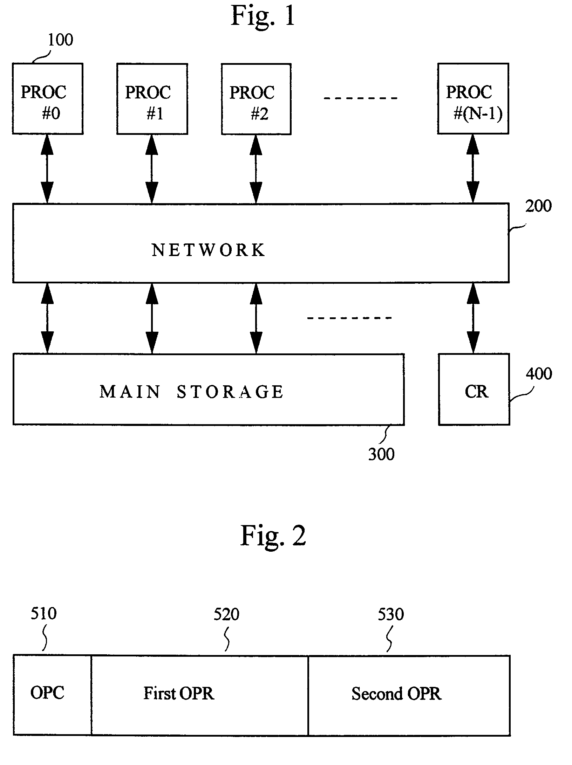

Referring to FIG. 1, a multi-processor system has N processors 100, a network 200 coupled to the processors 100, a main storage 300 coupled to the network 200, and a communication register 400 coupled to the network 200.

The processor 100 executes programs, which are processed as a "process", and has scaler registers for executing the programs. The network 200 connects not only between the processors 100 and the main storage 300, but also between the processors 100 and the communication register 400. The main storage 300 has N ports where N is equal to or greater than 1.

When the processors 100 access either main storage 300 or communication register 400, the processor 100 sends requests to the network 200. The network 200 arbitrates contention among a plurality of requests sent from a plurality of processors, and routes the requests either to the main storage 300 or to the communication register 400 as a request destination. In the main storage 300 or the communication register 400, a request is subjected to a read access or a write access. For a read access, read data is returned to the processor 100 through the network 200.

Referring to FIG. 2, an instruction format for access to communication register 400 has a plurality of fields including an operation code 510, a first operand 520, and a second operand 530.

The operation code field 510 designates a type of operation to be performed (e.g., a read access or a write access). The first operand 520 designates a destination register number. The second operand 530 designates a source register number. For example, for a load access, a value stored in a communication register word designated by the second operand field is transferred to a scaler register designated by the first operand. The scalar register is part of the processor 100. On the other hand, for a storage access, a value stored in a communication register designated by the first operand is transferred to a scaler register word designated by the second operand field

In the following, the address given to a communication register word is called a "physical address". The physical address is logically divided into two fields including a high-order field and a low-order field. The high-order field is called a "physical set number" and the low-order field is called an intraset "offset".

If the physical address has (n + m) bits (i.e., n bits of the physical set field plus m bits of the intraset offset), the communication register has 2^{n+m} words (i.e., 2^{m} intraset words multiplied by 2ⁿ physical sets), where n and m may be integer values. In a communication register access from the processors 100, a word of the communication register 400 to be accessed can be determined by designating a physical address.

The communication register address designated by the second operand field is called a "logical address". The logical address can be divided into a "logical set number" and an intraset "offset". The logical set number and the intraset offset have n' bits and m bits, respectively, where n' and m may be integer value. Thus, the logical address has (n' + m) bits in total. Therefore, the logical space is defined by a product of 2^{m} intraset words by 2^{n'} logical sets (i.e., 2^{n'+m} words).

Each of the intraset offset of the logical communication register address and that of the physical communication register address has m bits. That is, in either case, the number of words within a set is 2^{m}. However, as for the set number, a relationship n' > n holds. That is, the number of sets in the logical communication register address space is larger than that in the physical communication register address space.

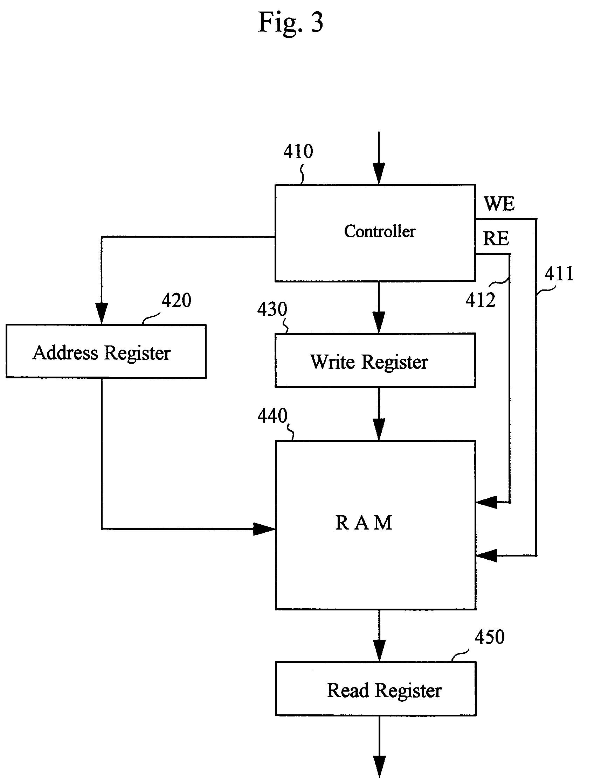

Referring to FIG. 3, the communication register 400 has a controller 410, an address register 420, a write register 430, a random access memory (RAM) 440, and a read register 450. The RAM 440 operates faster than the main storage 300, and is given consecutive address numbers starting from 0.

To access the RAM 440, a write register 430, an address register 420, and a read register 450 are provided, and a write enable signal 411 and a read enable signal 412 are supplied to the RAM 440. When the RAM 440 need not be accessed, both of the write enable signal and the read enable signal are nullified (e.g., rendered "low" to a value "0").

To write to the RAM 440, the write enable signal is asserted (e.g., rendered "high" to a value "1"), and the address of a word to be subjected to the writing is input to the address register 420, and data to be written is input to the write register 430. At the next timing, the data of the write register 430 is written to the word designated by the address register 420.

To read from the RAM 440, the read enable signal 412 is asserted (e.g., rendered "high" to a value "1"), and the address of a word to be subjected to reading is input to the address register 420. At the next timing, data of the word designated by the address register 420 is input to the read register 450. The above controls are managed by the controller 410.

Upon receiving a request from the network 200, the controller 410 decodes its operation code field and judges whether the operation is a load access or a store access.

For a storage access, the controller 410 controls the communication register so as to write data of a data field to a word of the RAM 440 at an address indicated by an address field. That is, a communication register address in the address field is input to the address register 420 at a write timing. Write data in the data field is input to the write register 430. At the same time, the write enable signal 411 is asserted (e.g., rendered "high" to a value "1") by the controller 410 so that the store access is completed at the next timing.

On the other hand, for a load access, the controller 410 enables reading data of a word of the RAM 440 at an address indicated by an address field, and enables sending the data as reply data to the network 200. That is, at a read timing, a communication register address in the address field is input to the address register 420 and the read enable signal 412 is asserted (e.g., rendered "high" to a value "1") by the controller 410. At the next timing, read data is written to the read register 450.

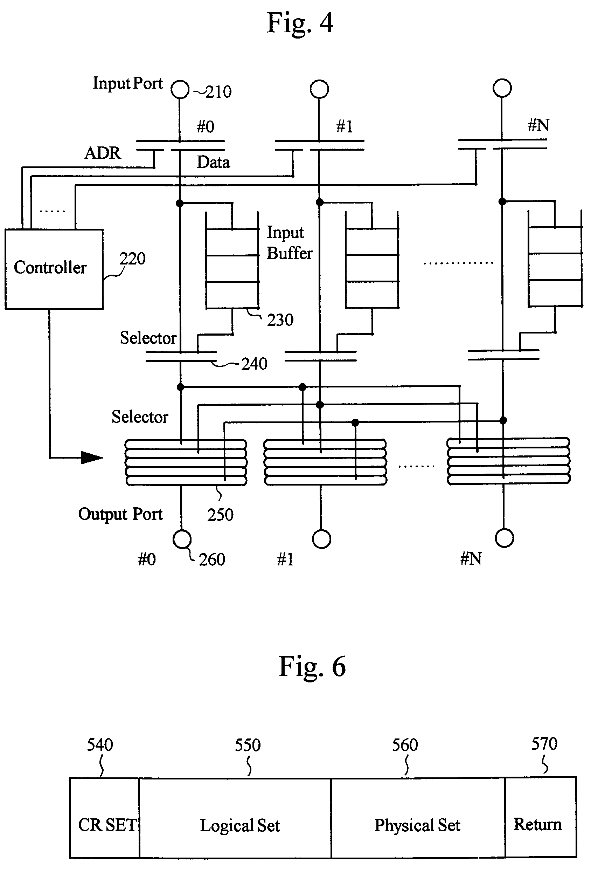

Referring to FIG. 4, the network 200 has a plurality of sets each including an input port 210, an input buffer 230, a 2-way selector 240, an (N+1)-way selector 250, and an output port 260. The network 200 further has a controller 220. Although various types of network configurations such as a bus and a ring can be employed as the network 200, in the exemplary configuration a full crossbar switch is employed as the basic configuration of the network 200, because a network configuration is desired in which "blocking" does not occur. Typically, "blocking" places one of two requests from different processors that arrived at the network at the same time into a waiting state, so as to pass only the second request. No blocking occurs in the full crossbar switch at all.

The full crossbar switch of FIG. 4 has a (N+1)-port input and a (N+1)-port output. The input ports #0 to #(N-1) are connected to the respective processors, and the input port #N is connected to the communication register 400. The output ports #0 to #(N-1) are connected to the main storage 300, and the output port #N is connected to the communication register 400.

The 2-way selector 240 selects between requests coming from the input port 210 and the input buffer 230. The (N+1)-way selector 250 selects among the outputs of the 2-way selector 240.

A request sent from the processor has an address field and a data field. When the request is input to the input port 210, the address field of the request is sent to the controller 220. This address field has information indicating which one of the (N+1) output ports is to be passed through.

The controller 220 selects one of a plurality of requests that are simultaneously requesting passage through the same output port according to the priority order of the ports. A selected input port number is input as a select signal of the (N+1)-way selector 250 corresponding to the output port 260 concerned, and the selected request passes through the (N+1)-way selector 250 and reaches the output port 260. The non-selected requests are temporarily stored in the input buffers 230, and a request passage request is again input to the controller 220 at the next timing. The controller 220 must have an equitable (equally weighted such as First-In First-Out (FIFO)) priority order of the input ports so as not to intentionally delay passage of a request from a certain port. For example, the priority order of the input port may change in a "round-robin" method.

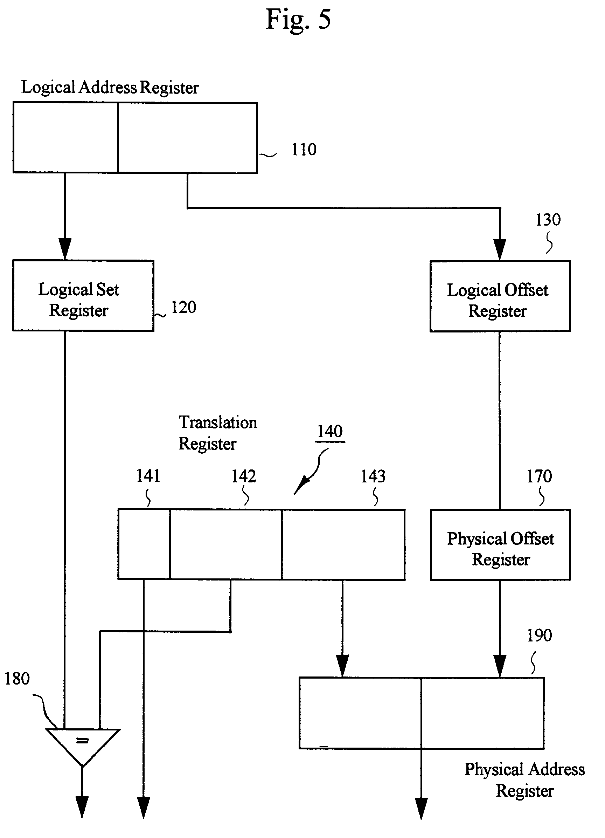

Referring to FIG. 5, an address converting (e.g., translating) section of the first embodiment provided in each of the processors 100 has a logical address register 110, a logical set register 120, a logical offset register 130, a translation register 140, a physical offset register 170, a comparator 180, and a physical address register 190. The logical address register 110 holds a logical address for the communication register 400. The logical set register 120 and the logical offset register 130 hold the logical set number and logical offset, respectively. The physical offset register 170 holds an output of the logical offset register 130.

The translation register 140 holds a mapped flag 141, a logical set number 142, and a physical offset 143. The mapped flag 141 indicates whether the logical set number 142 is mapped to the physical set number 143 or not. The logical set number 142 is mapped to the physical set number 143 if the mapped flag 141 is activated (e.g., has a value of "1").

The comparator 180 judges whether the logical set number in the logical set register 120 coincides with the logical set number 142. If the comparator 180 judges that there is coincidence, and the mapped flag 141 is activated, the physical address register 190 holds a pair of outputs of the physical set number 143 and the physical offset register 170.

The instructions issued by the processor 100 are classified into arithmetic instructions, main storage access instructions, communication register access instructions, and so on. The instructions are also classified into instructions executed by a user program and instructions executed by the operating system.

In operation, if an issued instruction from a processor 100 is a communication register access instruction, a logical address of the communication register is sent to the address converting section. This address is held in the logical address register 110. The logical set register 120 and the logical offset register 130 hold the logical set number and logical offset, respectively. An output of the logical offset register 130 is input, as it is, to the physical offset register 170. An output value of the translation register 140 is input to a physical set number field of the physical address register 190. Outputs of the physical set number field and the physical offset field of the physical address register 190 are combined to become high-order and low-order portions, respectively, and are sent to the network 200 as a physical address of the communication register access. The network 200 performs routing, and sends this request to the communication register 400.

If either the comparator 180 judges that there is no coincidence between the logical set number in the logical set register 120 and the logical set number 142 or the mapped flag 141 is not activated, interrupt processing begins and the user program terminates abnormally.

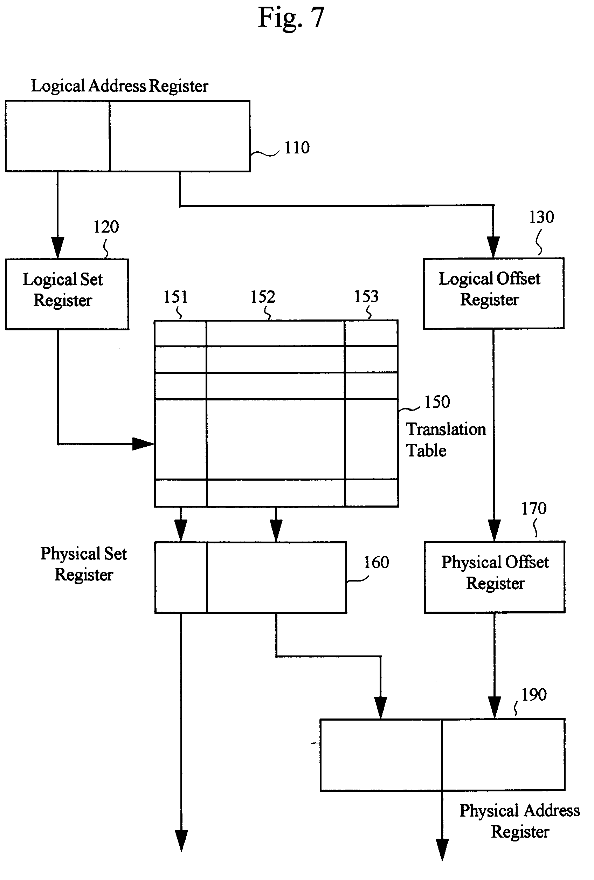

The value of the translation register 140 is changed by an instruction called a "communication register set instruction" issued by the processor 100. Referring to FIG. 6, a format of the communication register set instruction has a code of "CRSET" 540 which indicates the Communication Register SET instruction. The format has a logical set number 550 which indicates a logical set number from which translation is made. The format has a physical set number 560 which indicates the physical set number to which translation is made. The format has a return code 570 which indicates whether the translation has been completed normally or abnormally.

The communication register set instruction, which is a special privilege instruction that is allowed to be executed only by the operating system, cannot be executed by a user program. When the processor 100 issues the communication register set instruction, the logical set number indicated by the first operand field 550 and the physical set number indicated by the second operand field 560 of the instruction is written to the logical set number field 142 and the physical set number field 143 of the translation register 140, respectively. At the same time, to make this set number available, the mapped flag 141 is activated by the processor 100. Thereafter, the result (e.g., "success" or "failure") of the instruction is set to the scaler register designated by the return code field 570. As mentioned above, the scaler register is part of the processor 100.

An instruction called a "communication register reset instruction" also is prepared (and issued by the processor 100), which renders the pair of the logical set number 142 and the physical set number 143 of the translation register 140 invalid, to thereby prohibit communication register access. When this instruction is issued, the mapped flag 141 of the translation register 140 is nullified.

When a user program desires to use a certain set area of the communication register 400, it requests permission from the operating system. Upon acceptance of this request, the operating system secures a certain set area in the (physical) communication register 400 and sets a set number thereof in the translation register 140 by using a communication register set instruction.

After the setting operation, the operating system informs the user program of the setting operation completion. Thereafter, the user program can access this set area of the communication register.

When the user program further desires to use a different set area of the communication register 400, the user program requests the operating system to allocate more area of the communication register. Upon acceptance of this request, the operating system secures a new set area and sets a set number thereof in the translation register 140 by using a communication register set instruction.

After the setting operation, the operating system informs the user program of the setting completion. In this manner, the communication register area usable by one user process can be extended. That is, a plurality of set areas become usable without extending the communication register address of the communication register access instruction used by a user program.

Although the translation register 140 is assumed to hold one pair of addresses in the first embodiment described above, the translation register 140 may hold a plurality of pairs of addresses. In this case, the physical set number of the entry in which the logical address set coincides with the physical set number may be held.

Next, a multi-processor system in accordance with a second embodiment of the present invention will be described in detail with reference to the accompanying drawings.

Referring to Fig. 7, the second embodiment of the invention (i.e., the configuration of an address converting section in the processors 100) has a logical address register 110, a logical set register 120, a logical offset register 130, a translation table 150, a physical set register 160, a physical offset register 170, a physical address register 190. In the second embodiment, only the translation table 150 and the physical set register 160 are different from the first embodiment.

The translation table 150 has a mapped flag 151, a physical set field 152, and a swapped flag 153. The translation table 150 is indexed with a logical set number held by the logical set register 120. The mapped flag 151 indicates whether the logical set number is mapped to the physical set number 152 or not. The swapped flag 153 indicates whether an entry has been swapped out to the main storage or not.

The physical set register 160 holds outputs of the mapped flag 151 and the physical set number 152. An output of the physical set register 160 is held in a high-order bits portion of the physical address register 190.

If an issued instruction from a processor 100 is a communication register access instruction, a logical address of the communication register is sent to the address converting section. This address is held in the logical address register 110. The logical set register 120 and the logical offset register 130 hold the logical set number and logical offset, respectively. An output of the logical offset register 130 is input, as it is, to the physical offset register 170. An output value of the physical set register 160 is input to a physical set number field of the physical address register 190. Outputs of the physical set number field and the physical offset field of the physical address register 190 are combined to become high-order and low-order portions, respectively, and are input to the network 200 as a physical address of the communication register access. The network 200 performs routing, and outputs this request to the communication register 400.

The translation table 150 is indexed by the logical set number in the logical set register 120. The mapped flag 151 and the physical set number 152 of the translation table 150 are read and output to the physical set register 160.

If the mapped flag 151 is not activated, interrupt processing starts and the user program terminates abnormally. By the same token, if the swapped flag 153 is activated (i.e., indicating that the entry has been "swapped out" to main storage), interrupt processing starts and the operating system swaps in the entry from the main storage. Thus, the user program continues to be executed without abnormal termination thereof.

The value of the translation table 150 is changed by the communication register set instruction from the processor 100, similarly to the first embodiment of FIG. 6.

When the processor 100 issues the communication register set instruction, the physical set number indicated by the second operand field 560 of the instruction is written to the physical set number field 152 of the translation table 150 in the entry indexed by the logical set number indicated by the first operand field 550. At the same time, to make this set number available, the mapped flag 151 (e.g., in FIG. 7) is activated in the entry indexed by the logical set number indicated by the first operand field 550. Thereafter, the result (e.g., "success" or "failure") of the instruction is output to the scaler register designated by the return code field 570.

An instruction called the "communication register reset instruction" also is prepared, which makes the entry indexed by the logical set number indicated by the first operand field 550 invalid, to thereby prohibit communication register access. When this instruction is issued, the mapped flag 151 in the entry indexed by the logical set number indicated by the first operand field 550 is nullified.

When a user program desires to use a certain set area of the communication register, the user program requests permission from the operating system. Upon acceptance of this request, the operating system secures a certain set area in the (physical) communication register 400 and sets a set number thereof in the translation table 150 by using a communication register set instruction. After the setting operation, the operating system informs the user program of the setting operation completion. Thereafter, the user program can access this set area of the communication register.

When the user program further desires to use a different set area of the communication register, the user program requests the operating system to allocate more area of the communication register. Upon acceptance of this request, the operating system secures a new set area and sets a set number thereof in the translation table 150 by using a communication register set instruction. After the setting, the operating system informs the user program of the setting completion. Thus, the communication register area usable by one user process can be extended, such that a plurality of set areas become usable without extending the communication register address of the communication register access instruction used by a user program.

As described above, if the swapped flag 153 is activated (i.e., "swapped out"), interrupt processing starts. In this interrupt processing, a content swapped out in the main storage without allocation is swapped into a selected word of the communication register.

There are several methods of selecting a swap-in word. For example, a word having a lowest frequency of use may be selected. In this case, each word of the communication register 400 has a reference counter for counting every reference marker. The reference counter is checked when selecting an entry to be swapped out. Thus, a least-frequently-used word is selected by comparing the reference counter of each entry. To prevent overflow of the reference counter, the reference counter may be reset periodically.

Although the communication register 400 is assumed to be swapped by a single word unit in the embodiments described above, it may be swapped by a set of words.

Alternatively, an extended storage unit (e.g., a disc storage and/or a magnetic tape) may be selected as a swap-out destination. The swap-out/swap-in processing can be performed most easily if it is done by the operating system through software. Of course, as known by one of ordinary skill in the art taking the present application as a whole, a hardware configuration supporting the above functions also is envisioned and within the ordinarily skilled artisan's grasp reading this application.

After completion of the swap-in, the physical address value of the swap-in communication register is updated to a value of the physical address field 152 of the entry of the translation table 150 indicated by the logical address. After completion of the interrupt processing, the program is restarted from the point where the interruption occurred. The communication register access that caused the interruption is again subjected to translation by the address translation section. At this time, since the swapped flag 153 is enabled and a physical address can be obtained, access to the communication register access is achieved.

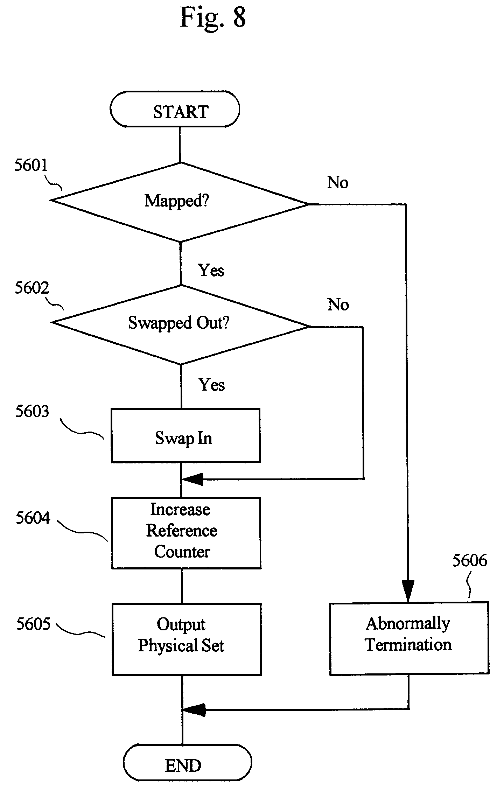

Hereinbelow and referring to FIGs. 7 and 8, the operation of the image processing system in accordance with the above-mentioned second embodiment of the present invention will be described.

With a communication register access instruction, the translation table 150 is indexed by the logical set number held in the logical set register 120. If the mapped flag 151 indicates that the logical set number is "unmapped" to the physical set number 152 (step S601), the program terminates abnormally (step S606).

If the mapped flag 151 indicates that the entry is "mapped" to the physical set number (step S601), then the swapped flag 153 is tested to determine whether it has been swapped out to the main storage (step S602). Then, if the swapped flag 153 indicates that the entry has been "swapped out" to the main storage, the word of the communication register designated by the physical set number 152 is swapped in from the main storage (step S603).

In step S604, the reference counter of the accessed word of the communication register is incremented. Then, the physical set number 152 from the translation table 150 is output to the physical set register 160 (step S605).

As described above, in the multi-processor system in accordance with the first and second embodiments of the present invention, the communication register is accessed through the logical address. Thus, it prevents the fragmentation and the exhaustion (e.g., unavailability) of the communication register.

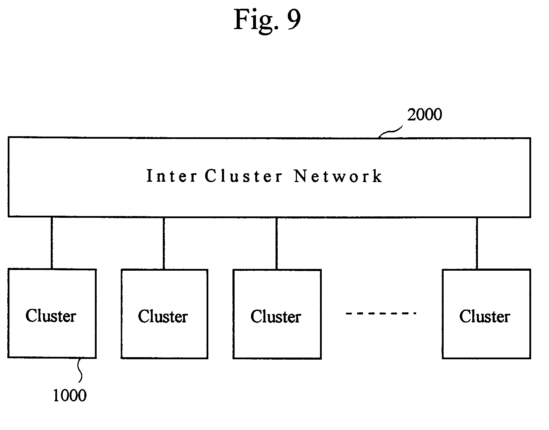

The present invention is not limited to the multi-processor system described in the above first and second embodiments. For example, as shown in FIG. 9, a multi-processor system of the present invention may be a clustered multi-processor system. That is, each cluster 1000, which is connected to other clusters 100 by an inter-cluster network 2000, has multi-processors like FIG. 1. Then, each cluster has the communication register available in a distributed manner such that the communication register is divided into the clusters.

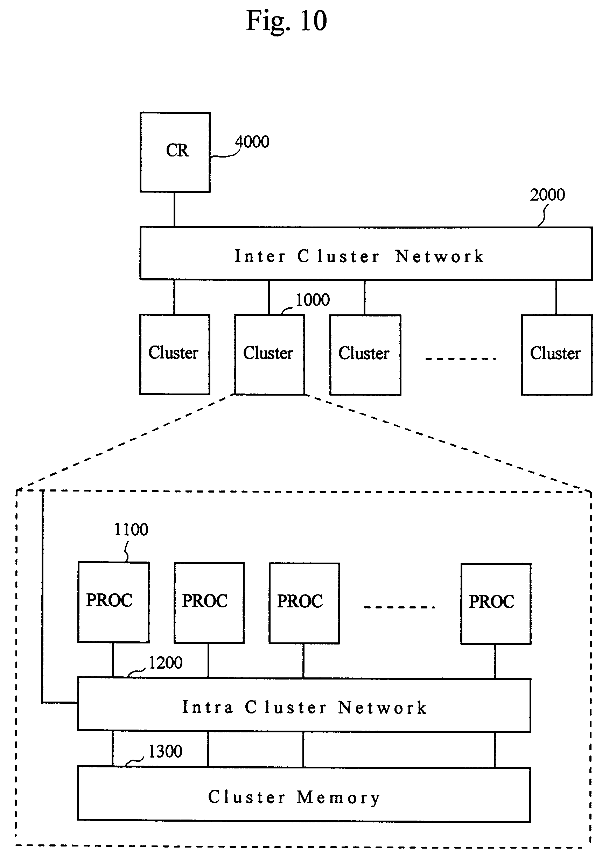

Referring to FIG. 10, another type of multi-processor system is shown. In this case, a communication register 4000 is connected to an inter-cluster network 2000. That is, the communication register 4000 is shared by each cluster 1000. Each cluster 1000 has processors 1100, an intra-cluster network 1200, and a cluster memory 1300. In this case, each cluster may have a copy of the communication register 4000.

As is apparent from the above description, according to the present invention, since the communication register is accessed through the logical address, the communication register is not exhausted even when the set size becomes large, and the process execution is unlikely to be abnormally terminated. Thus, the communication registers will be provided with a sufficient size for each process.

While the invention has been described in terms of preferred embodiments, those skilled in the art will recognize that the invention can be practiced with modification within the spirit and scope of the appended claims.

## Claims

1. A multi-processor system, including:
a plurality of processors; and
a communication register for being accessed by any of said plurality of processors,
wherein said communication register is accessed with a logical address output by said any of said plurality of processors.

2. A multi-processor system, comprising:
a plurality of processors;
a communication register for being accessed by any of said plurality of said processors; and
a translator for translating a logical address of said communication register issued by said any of said plurality of processors to a physical address of said communication register.

3. The multi-processor system as claimed in claim 2, further comprising a network for connecting between said any of said plurality of processors and said communication register.

4. The multi-processor system as claimed in claim 3, wherein said network comprises a crossbar network.

5. The multi-processor system as claimed in claim 2, 3 or 4 wherein said plurality of processors are divided into clusters, and
said communication register is distributed into each of said clusters.

6. The system as claimed in any of claims 2 to 5, wherein said processors are divided into clusters, and said communication register is shared by said clusters.

7. The multi-processor system as claimed in claim 6, wherein each of said clusters includes a copy of said communication register.

8. The system as claimed in any of claims 2 to 7, wherein said translator comprises a translation register for holding a pair of addresses comprising the logical address and the physical address.

9. The multi-processor system as claimed in claim 8, wherein said translator further comprises a comparator for comparing a logical address to be translated and the address held in said translation register.

10. The multi-processor system as claimed in claim 9, wherein said translation register holds a mapped flag for indicating whether the logical address is mapped onto the physical address.

11. The system as claimed in any of claims 2 to 10, wherein said translator comprises a translation table which holds the physical address.

12. The multi-processor system as claimed in claim 11, wherein said translation table is indexed with a logical address to be translated.

13. The multi-processor system as claimed in claim 12, wherein said translation table holds a mapped flag which indicates whether the logical address is mapped onto the physical address.

14. The multi-processor system as claimed in claim 11,12 or 13, wherein a word of said communication register is swapped out to a predetermined storage unit to prevent exhausting said communication register.

15. The multi-processor system as claimed in claim 14, wherein said communication register is swapped out by a word of the communication register at a time.

16. The multi-processor system as claimed in claim 14, wherein said communication register is swapped out by a set of words of the communication register at a time.

17. The system as claimed in any of claims 14 to 16, wherein said word of said communication register is swapped out to a main storage.

18. A method of accessing a communication register by a multi-processor system, said method comprising steps of:
translating a logical address from a processor to a physical address of said communication register; and
judging whether the logical address is mapped onto the physical address.

19. The method of accessing the communication register as claimed in claim 18, further including a step of swapping in a word of said communication register designated by the logical address.

20. The method of accessing the communication register as claimed in claim 19, further including a step of swapping out a word of said communication register designated by the physical address before said step of swapping in.
